# FASCICULE DE BREVET EUROPEEN

(11) **EP 2 004 440 B1**
(45) Date de publication et mention de la délivrance du brevet: **16.03.2011**
(21) Numéro de dépôt: 07788940.0
(22) Date de dépôt: 12.04.2007
(51) Int. Cl.: B60K 11/08

(54) **GUIDE D'AIR POUR VEHICULE AUTOMOBILE, PEAU DE PARE-CHOCS MUNIE D'UN TEL GUIDE D'AIR**
LUFTLEITUNG FÜR EIN MOTORFAHRZEUG UND STOSSSTANGENVERKLEIDUNG MIT DIESER LUFTLEITUNG
AIR GUIDE FOR MOTOR VEHICLE, BUMPER SKIN FITTED WITH SAID AIR GUIDE

(30) Priorité: 13.04.2006 FR 0603295
(43) Date de publication de la demande: 24.12.2008
(73) Titulaire: Compagnie Plastic Omnium, 69007 Lyon (FR)
(72) Inventeur: GILOTTE, Philippe, 01470 Benonces (FR); CHERON, Hugues, 01800 Meximieux (FR); FAYT, Arnold, 01640 Jujurieux (FR)
(74) Mandataire: Thiollier, Clémence-Olivia Laure Marie
(86) Numéro de dépôt international: PCT/FR2007/051102
(87) Numéro de publication internationale: WO 2007/125237

(56) Documents cités:
- EP-A- 0 535 255
- EP-A2- 1 241 080
- DE-A1- 4 018 347
- DE-A1- 10 159 783
- JP-A- 04 208 640
- US-A- 5 724 925
- US-B1- 6 405 819

## Description

La présente invention concerne un guide d'air pour véhicule automobile, ainsi qu'une peau de pare-chocs munie d'un tel guide d'air.

On connaît déjà dans l'état de la technique un guide d'air, agencé généralement pour guider l'air entrant par une grille d'entrée d'air vers un ou plusieurs radiateurs à refroidir. Ce guide d'air participe à la délimitation d'un compartiment dans lequel l'air entrant peut circuler, appelé compartiment de guidage dans la suite.

Document JP 04-20864 divulgue un guide d'air avec toutes les caractéristiques du préambule de la revendication 1.

On sait par ailleurs que les dimensions de l'entrée d'air sont limitées par le design du véhicule, si bien qu'il est fréquent que la surface de l'entrée d'air soit plus petite que celle du radiateur à refroidir. Le guide d'air est alors configuré de façon à répartir l'air entrant sur toute la surface du radiateur.

Le problème consiste en ce qu'il est fréquent de voire apparaître des zones dites « mortes » dans le compartiment de guidage de l'air, c'est-à-dire des zones dans lesquelles l'air circule peu, du fait notamment de cette différence de section, si bien que certaines parties du radiateur, souvent les bordures, sont moins alimentées que d'autres en air frais.

La présente invention vise à remédier à cet inconvénient en fournissant un guide d'air assurant un meilleur guidage de l'air, afin d'assurer le refroidissement de toute la surface du radiateur.

A cet effet, l'invention a pour objet un guide d'air pour véhicule automobile, comportant au moins une paroi de guidage de l'air s'étendant depuis une zone d'entrée d'air jusqu'à un radiateur du véhicule, caractérisé en ce que la paroi comprend une ouverture d'échappement d'air, agencée en amont du radiateur.

Ainsi, lors de l'écoulement de l'air dans le compartiment de guidage, l'ouverture d'échappement crée un appel d'air qui empêche la stagnation de l'air au voisinage de la paroi de guidage. Si cette zone d'air est convenablement positionnée par rapport à une zone morte, le volume de cette zone morte est considérablement diminué, ce qui libère l'accès pour que l'air entrant s'écoule dans une plus grande partie du compartiment de guidage et donc vers toute la surface du radiateur.

Ce guide d'air est d'autant plus avantageux sur les véhicules munis de plusieurs radiateurs. En effet, il est courant d'ajouter un radiateur supplémentaire de petite taille en-dessous ou au-dessus du radiateur de refroidissement du moteur, tel qu'un radiateur de refroidissement d'air de suralimentation. Ce radiateur supplémentaire est disposé en bordure par rapport au radiateur principal, si bien qu'il n'est pas en face de l'entrée d'air et une grande proportion de ce radiateur risque d'être gênée par des zones mortes. Grâce à l'invention, la diminution du volume des zones mortes permet d'assurer le refroidissement de cette grande proportion. On retrouve ce même avantage supplémentaire pour les véhicules dans lesquels le radiateur est petit et positionné de façon décalée par rapport aux entrées d'air.

Selon un mode de réalisation préféré de l'invention, l'ouverture d'échappement est munie de moyens de guidage de l'air à travers l'ouverture. Ces moyens de guidage prennent par exemple la forme d'ailettes et sont de préférence orientés de façon à guider l'air issu de l'entrée d'air vers l'extérieur du véhicule et à empêcher l'intrusion d'air dans le sens opposé. En effet, de façon surprenante, le radiateur est davantage refroidi lorsque les moyens de guidage permettent à l'air de s'échapper du compartiment de guidage que lorsqu'ils permettent à de l'air extérieur d'entrer dans le compartiment.

De préférence, le guide d'air comporte des moyens de fixation à une peau de pare-chocs.

De préférence également, le guide d'air constitue le convergent inférieur du véhicule, c'est-à-dire que non seulement il guide l'air vers le radiateur, mais il isole en outre la partie basse du bloc moteur, de façon à garantir l'aérodynamique du véhicule.

Selon un mode de réalisation, le guide d'air délimite en partie un compartiment de guidage de l'air vers le radiateur, et l'ouverture est ménagée sur une paroi inférieure de ce compartiment de guidage. De manière alternative ou additionnelle, l'ouverture est ménagée sur une paroi supérieure de ce compartiment de guidage.

L'invention a également pour objet une peau de pare-chocs munie d'un guide d'air tel que précédemment décrit. Eventuellement, le guide d'air est réalisé d'un seul tenant avec la peau.

L'invention sera mieux comprise à la lecture de la description qui va suivre, donnée uniquement à titre d'exemple et faite en se référant aux dessins dans lesquels :
- la figure 1 est une coupe longitudinale schématique de l'avant d'un véhicule comprenant un guide d'air selon l'état de la technique ; et
- la figure 2 est une coupe longitudinale schématique de l'avant d'un véhicule comprenant un guide d'air selon un mode de réalisation de l'invention.

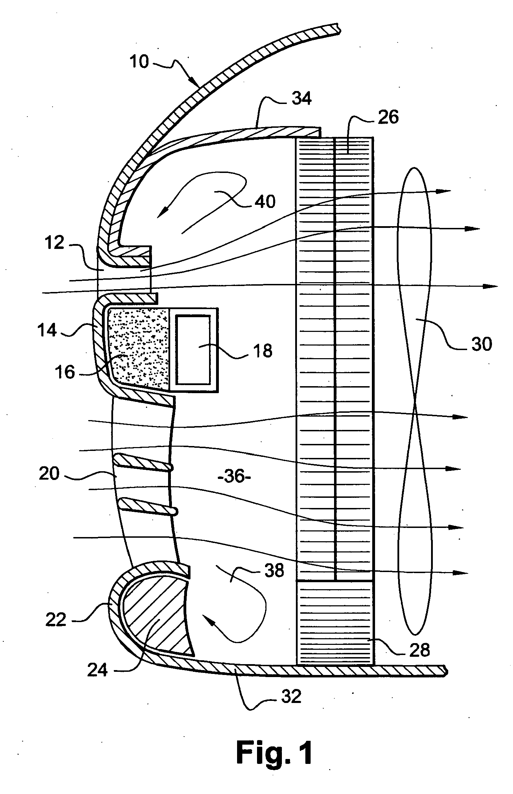

Comme on peut le voir sur la figure 1, un bloc avant d'un véhicule tel qu'utilisé dans l'état de la technique comprend une peau de pare-chocs 10, munie d'une entrée d'air supérieure 12, d'une enveloppe 14, derrière laquelle sont logés un absorbeur 16 et une poutre de chocs 18, d'une entrée d'air inférieure 20 et d'une enveloppe 22, derrière laquelle est logé une poutre basse 24 destinée à épargner la jambe d'un piéton.

Le bloc avant du véhicule comporte également, derrière cette peau de pare-chocs 10, un radiateur principal 26, un radiateur secondaire 28, et un ventilateur 30. Le radiateur principal 26 a pour fonction de refroidir le circuit de refroidissement du moteur, au contact de l'air entrant par les entrées 12 et 20. Le radiateur secondaire 28 a pour fonction quant à lui de refroidir l'air de suralimentation du moteur.

Afin de guider l'air entrant par les entrées 12 et 20 vers les radiateurs 26, 28, un guide d'air inférieur 32 et un guide d'air supérieur 34 s'étendent depuis ces zones d'entrées d'air vers les radiateurs. Ces guides d'air 32, 34 comprennent essentiellement une paroi de guidage, permettant de délimiter un compartiment 36 de guidage de l'air vers les radiateurs, le guide d'air 42 constituant la paroi inférieure du compartiment 36, et le guide d'air 44 sa paroi supérieure. Le guide d'air 42 constitue en outre le convergent inférieur du véhicule.

Comme on peut le voir sur la figure 1, du fait de la section plus petite des entrées 12, 20 par rapport à la section des radiateurs réunis 26, 28, le compartiment de guidage 36 comporte des zones mortes 38, 40. Ces zones 38, 40 sont situées à la hauteur de la partie supérieure de la peau de pare-chocs 10 et de la poutre basse 24. L'air circule peu dans ces zones car elles sont décalées par rapport aux entrées d'air 12, 20. Du fait de cette conformation, l'air qui stagne empêche l'air issu des entrées 12, 20 d'aller vers les zones des radiateurs situées à la hauteur des zones mortes 38, 40, à savoir le haut du radiateur principal 26 et la majeure partie du radiateur secondaire 28.

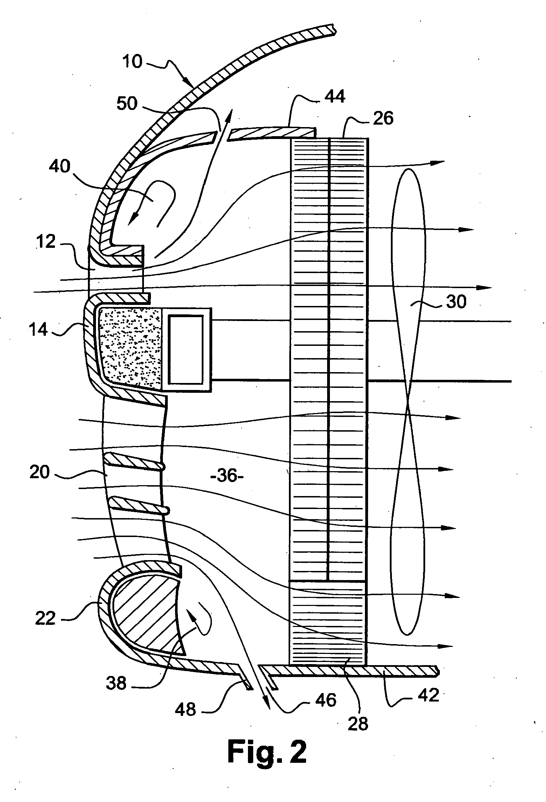

Comme on peut le voir sur la figure 2, les guides d'air selon l'invention permettent une meilleure circulation de l'air vers ces parties des radiateurs 26, 28. En effet, conformément à l'invention, le guide d'air 32 est remplacé par un guide d'air 42, réalisé d'un seul tenant avec la peau de pare-chocs 10, et le guide d'air 34 est remplacé par un guide d'air 44 fixé sur la partie supérieure de la peau 10.

La paroi du guide d'air 42 comprend une ouverture 46 d'échappement d'air, agencée en amont des radiateurs 26, 28. Cette ouverture 46 est munie de moyens de guidage de l'air, à savoir des ailettes 48. Ces ailettes sont orientées de façon à guider l'air issu des entrées d'air 12, 20 vers l'extérieur du compartiment de guidage 36, tout en empêchant l'intrusion d'air dans le sens opposé. En d'autres termes, lorsque le véhicule roule, l'air ne peut pas entrer par l'ouverture 46 depuis l'extérieur du compartiment 36 vers l'intérieur du compartiment.

Le guide d'air 44 est également muni d'une ouverture 50 d'échappement d'air.

Comme on peut le voir sur la figure 2, les ouvertures 46, 50 créent un appel d'air : l'air entrant par les entrées 12, 20 est incité à aller vers ces ouvertures 46 et 50, ce qui diminue considérablement le volume des zones mortes 38, 40. Ainsi, grâce aux ouvertures 48, 50, on libère l'accès par l'air aux extrémités des radiateurs 26, 28 qui donc davantage refroidies.

Parmi les avantages de l'invention, on notera qu'elle permet d'améliorer le refroidissement du véhicule en ménageant les ouvertures, ce qui allège le véhicule.

On notera enfin que l'invention n'est pas limitée au mode de réalisation précédemment décrit.

En particulier, on pourrait prévoir une ouverture sur une paroi latérale du compartiment de guidage.

## Revendications

1. Guide d'air (42, 44) pour véhicule automobile, comportant au moins une paroi de guidage de l'air s'étendant depuis une zone d'entrée d'air (12, 20) jusqu'à un radiateur (26, 28) du véhicule, **caractérisé en ce que** le guide d'air délimite en partie un compartiment (36) de guidage de l'air vers le radiateur, et **en ce que** la paroi comprend une ouverture d'échappement d'air (46, 50), cette ouverture étant ménagée sur une paroi inférieure de ce compartiment de guidage, et étant agencée en amont du radiateur.

2. Guide d'air selon la revendication 1, dans lequel l'ouverture d'échappement est munie de moyens de guidage (48) de l'air à travers l'ouverture (46).

3. Guide d'air selon la revendication 2, dans lequel les moyens de guidage (48) sont de préférence orientés de façon à guider l'air issu de l'entrée d'air vers l'extérieur du véhicule et à empêcher l'intrusion d'air dans le sens opposé.

4. Guide d'air selon la revendication 2 ou 3, dans lequel les moyens de guidage sont sous forme d'ailettes (48).

5. Guide d'air selon l'une quelconque des revendications 1 à 4, comportant des moyens de fixation à une peau (10) de pare-chocs (6).

6. Guide d'air selon l'une quelconque des revendications 1 à 5, constituant le convergent inférieur du véhicule.

7. Guide d'air selon l'une quelconque des revendications 1 à 6, délimitant en partie un compartiment (36) de guidage de l'air vers le radiateur, l'ouverture (50) étant ménagée sur une paroi supérieure de ce compartiment de guidage.

8. Peau de pare-chocs munie d'un guide d'air selon l'une quelconque des revendications 1 à 7.

9. Peau selon la revendication 8, réalisée d'un seul tenant avec le guide d'air (42).

## Claims

1. An air guide (42, 44) for a motor vehicle, the guide comprising at least one air guide wall extending from an air inlet zone (12, 20) to a radiator (26, 28) of the vehicle, the guide being **characterized in that** it defines part of a guide compartment (36) for guiding air towards the radiator, and **in that** the wall includes an air exhaust opening (46, 50), the opening being provided in a bottom wall of said guide compartment and being arranged upstream from the radiator.

2. An air guide according to claim 1, wherein the exhaust opening is provided with guide means (48) for guiding air through the opening (46).

3. An air guide according to claim 2, wherein the guide means (48) are preferably oriented in such a manner as to guide the air coming from the air inlet towards the outside of the vehicle and to prevent air from intruding in the opposite direction.

4. An air guide according to claim 2 or claim 3, wherein the guide means are in the form of fins (48).

5. An air guide according to any one of claims 1 to 4, including fastener means for fastening to a skin (10) of a bumper (6).

6. An air guide according to any one of claims 1 to 5, constituting the bottom spoiler of the vehicle.

7. An air guide according to any one of claims 1 to 6, defining part of a guide compartment (36) for guiding air towards the radiator, the opening (50) being provided in a top wall of said guide compartment.

8. A bumper skin provided with an air guide according to any one of claims 1 to 7.

9. A skin according to claim 8, made integrally with the air guide (42).

## Patentansprüche

1. Luftführung (42, 44) für Kraftfahrzeug, die mindestens eine Luftführungswand aufweist, die sich von einer Lufteingangszone (12, 20) bis zu einem Kühler (26, 28) des Fahrzeugs erstreckt, **dadurch gekennzeichnet, dass** die Luftführung zum Teil einen Führungsraum (36) der Luft zum Kühler abgrenzt und dass die Wand eine Luftauslassöffnung (46, 50) aufweist, wobei diese Öffnung an einer unteren Wand dieses Führungsraums und stromaufwärts des Kühlers eingerichtet ist.

2. Luftführung nach Anspruch 1, bei der die Auslassöffnung mit Mitteln (48) zum Führen der Luft durch die Öffnung (46) versehen ist.

3. Luftführung nach Anspruch 2, bei der die Führungsmittel (48) vorzugsweise derart ausgerichtet sind, dass die Luft, die aus dem Lufteinlass austritt, zur Außenseite des Fahrzeugs geführt und das Eindringen von Luft in die entgegen gesetzte Richtung verhindert wird.

4. Luftführung nach Anspruch 2 oder 3, bei der die Führungsmittel die Form von Rippen (48) haben.

5. Luftführung nach einem der Ansprüche 1 bis 4, die Mittel zum Befestigen an eine Verkleidung (10) einer Stoßstange (6) haben.

6. Luftführung nach einem der Ansprüche 1 bis 5, die den unteren Einlass des Fahrzeugs bilden.

7. Luftführung nach einem der Ansprüche 1 bis 6, die zum Teil einen Führungsraum (36) der Luft zu dem Kühler abgrenzt, wobei die Öffnung (50) an einer oberen Wand dieses Führungsraums eingerichtet ist.

8. Stoßstangenverkleidung, die mit einer Luftführung nach einem der Ansprüche 1 bis 7 versehen ist.

9. Verkleidung nach Anspruch 8, die einstückig mit der Luftführung (42) hergestellt ist.
